# EUROPEAN PATENT SPECIFICATION

(11) **EP 3 542 152 B1**
(45) Date of publication and mention of the grant of the patent: **29.04.2020**
(21) Application number: 17798176.8
(22) Date of filing: 06.11.2017
(51) Int. Cl.: G01N 27/12

(54) **A GAS SENSOR FOR DETECTING A GAS COMPONENT**
GASSENSOR ZUR DETEKTION EINER GASKOMPONENTE
CAPTEUR DE GAZ SERVANT À DÉTECTER UN COMPOSANT GAZEUX

(30) Priority: 21.11.2016 EP 16199816
(43) Date of publication of application: 25.09.2019
(73) Proprietor: Unilever N.V., 3013 AL Rotterdam (NL); Unilever PLC, London, Greater London EC4Y 0DY (GB); Indian Institute of Science, Bangalore, Karnataka 560012 (IN)
(72) Inventor: MURALIDHARAN, Girish, Whitefield Bangalore 560 066 (IN); PRAMANIK, Amitava, Whitefield Bangalore 560 066 (IN); BHAT, Navakanta, Ramanath, Bangalore 560012 Karnataka (IN); MISHRA, Vijay, Umashankar, Bengaluru 560012 Karnataka (IN); MUTHU KANNAN, Srinidhi, Bengaluru 560012 Karnataka (IN)
(74) Representative: Tansley, Sally Elizabeth
(86) International application number: PCT/EP2017/078295
(87) International publication number: WO 2018/091293

(56) References cited:
- EP-A2- 0 252 627
- CN-A- 103 626 233
- US-A1- 2003 099 575
- US-A1- 2009 159 446
- SZILAGYI I M ET AL: "Gas sensing selectivity of hexagonal and monoclinic WO3 to H2S", SOLID STATE SCIENCES, ELSEVIER, PARIS, FR, vol. 12, no. 11, 1 November 2010 (2010-11-01), pages 1857-1860, XP027430303, ISSN: 1293-2558, DOI: 10.1016/J.SOLIDSTATESCIENCES.2010.01.019 [retrieved on 2010-01-18]
- PONZONI ANDREA ET AL: "Ultrasensitive and highly selective gas sensors using three-dimensional tungsten oxide nanowire networks", APPLIED PHYSICS LETTERS, A I P PUBLISHING LLC, US, vol. 88, no. 20, 15 May 2006 (2006-05-15), pages 203101-203101, XP012081739, ISSN: 0003-6951, DOI: 10.1063/1.2203932
- PENZA M ET AL: "Tungsten trioxide (WO3) sputtered thin films for a NOx gas sensor", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 50, no. 1, 15 July 1998 (1998-07-15), pages 9-18, XP004142098, ISSN: 0925-4005, DOI: 10.1016/S0925-4005(98)00149-X

## Description

### Field of the invention

The invention relates to a gas sensor for detecting a gas component, in particular for detecting sulphurous compounds.

The invention further relates to a method of manufacturing such a gas sensor.

### Background of the invention

Gaseous sulphurous compounds are often present as pollutant for example in industrial processes. As sulphurous compounds may be toxic at low concentrations it is important to detect such compounds at low concentrations. Hydrogen sulphide (H₂S), for example, is a colourless gas having an obnoxious odour and strong toxicity. H₂S is a chemical neurotoxin, which causes irritation, suffocation and damage or red blood cells in humans. Although H₂S can be detected by the human nose at low levels (as low as 0.5 ppb), H₂S paralyzes the olfactory nerve after a few inhalations, disabling the sense of smell.

Gas sensors of the semiconductor type are known in the art. Such sensors rely on the change of resistance or conductance of the material of the sensing layer when exposed to certain gases. Gas sensors of the semiconductor type typically comprise metal oxides such as SnO₂, WO₃, TiO₃ and ZnO.

Generally the metal oxides are prepared and processed into a paste to form films onto a substrate such as a silica or alumina substrate.

Although the semiconductor gas sensors known in the art have many advantages such as their simple structure, ease of use, low manufacturing costs and low maintenance costs, the semiconductor gas sensors known in the art also have drawbacks such as insufficient sensitivity (high detection limit), in particular for sulphurous compounds such as, for example, hydrogen sulphide (H₂S). The semiconductor gas sensors known in the art generally fail to detect hydrogen sulphide below 100 ppb (parts per billion) and if they detect hydrogen sulphide at low concentration, the response time and recovery time of the gas sensors is unacceptable long (in the order of 100 seconds). Next to the detection limit, response times and recovery times of a gas sensor are paramount for practical applications. Without fast recovery, a gas sensor may not be able to inform whether one or several leaks have occurred in short succession or how much gas escaped.

US 2014/138259 AA (THE UNIV OF CALIFORNIA) describes gas sensors comprising a gas sensing element comprising tungsten oxide nanoparticles and a thin-film heating element.

US 2009/159446 AA (GENERAL ELECTRIC CO) describes a gas sensor including a gas sensing layer comprising doped oxygen deficient tungsten oxide and a dopant. The sensor is capable of detecting at least one gas selected from the group consisting of NO, NO₂, SOₓ, O₂, H₂O and NH₃.

US 5,621162 A (LG, 1997) describes a gas sensor for detecting a sulfuric gas component comprising:
- a sensing layer containing a mixture of SnO₂ and WO₃;
- first and second electrodes coupled across said sensing layer;
- a heater for heating the gas sensor to a temperature of sensing operation.

US 5,321,146 A (EASTMAN KODAK CO, 1994) describes hydrogen sulfide gas sensors that comprise a WO₃-based sensing layer.

### Summary of the invention

It is an object of the present invention to provide a gas sensor for detecting a gas component, in particular sulphurous gas components such as hydrogen sulphide (H₂S). It is another object of the present invention to provide a gas sensor allowing the detection of sulphurous gas components at low concentration.

Furthermore, it is an object of the present invention to provide a gas sensor in particular to detect sulphurous gas components having low response time and low recovery time.

It is a further object of the present invention to provide a method of manufacturing a gas sensor.

### Brief description of the drawings

- Figure 1 show a schematic illustration of an embodiment of a gas sensor according to the present invention;
- Figure 2 shows a graphical representation of the responses of a gas sensor according to the present invention when exposed to different concentrations of hydrogen sulfide.

### Detailed description of the invention

According to a first aspect of the present invention relates to a gas sensor for detecting a gas component comprising:
- a sensing layer comprising 20 to 95 wt.% tungsten oxide and 5 to 80 wt.% elemental tungsten, the combination of tungsten oxide and elemental tungsten constituting at least 60 wt.% of the sensing layer;
- a first electrode and a second electrode, said first and second electrode being coupled electronically across the sensing layer;
- a heating element capable of heating the sensing layer to a temperature of at least 150°C.

The sensing layer of a gas sensor according to the present invention comprises tungsten oxide as well as elemental tungsten. This means that tungsten is present in the sensing layer as oxide as well as metal. The presence of tungsten oxide and of elemental tungsten can be confirmed by X-ray Photoelectron Spectroscopy (XPS).

Preferably, the sensing layer of the gas sensor comprises between 30 and 90 wt.%, more preferably between 35 and 80 wt.% and most preferably between 40 and 60 wt.% tungsten oxide.

Elemental tungsten is preferably present in the sensing layer in a concentration between 10 and 70 wt.%, more preferably between 20 and 65 wt.% and most preferably between 40 and 60 wt.%.

The combination of tungsten oxide and elemental tungsten constitutes preferably at least 60 wt.% of the sensing layer. More preferably, the combination of tungsten oxide and elemental tungsten constitutes at least 70 wt.%, at least 80 wt.%, at least 90 wt.%, at least 95 wt.% of the sensing layer.

The sensing layer may contain additional metal dopants like gold, palladium and/or platinum. Typically, the concentration of dopant in the sensing layer is less than 10%, more preferably less than 5 %.

In preferred embodiments the sensing layer has a thickness ranging between 50 nm and 1000 nm. More preferably, the sensing layer has a thickness ranging between 100 nm and 800 nm or between 100 nm and 500 nm as for example 150 nm or 200 nm.

The sensing layer has preferably a surface roughness lower than 50 nm. More preferably the sensing layer has a surface roughness lower than 20 nm, most preferably lower than 10 nm. The surface roughness of the sensing layer can be determined by Atomic Force Microscopy (AFM).

Optionally, the gas sensor according to the present invention may comprise one or more additional sensing layers in addition to the sensing layer comprising tungsten oxide and elemental tungsten as specified above.

The first electrode and the second electrode are coupled electronically across the sensing layer to measure the resistivity or conductivity or the change in resistivity or change in conductivity. The first and the second electrode are preferably in communication with the sensing layer.

Preferably, the first and the second electrode are imbedded in the material of the sensing layer.

The first electrode and the second electrode are preferably positioned at distance from each other that is in the range of 1 to 1000 µm, more preferably in the range of 2 to 500 µm and most preferably in the range of 5 to 100 µm.

The first electrode and the second electrode preferably comprise one or more electrode materials selected from gold, silver, platinum, palladium, titanium, indium, indium tin oxide (ITO), carbon and combinations thereof.

The heating element of the gas sensor is capable of raising the temperature of the sensing layer to a range that yields optimal sensitivity and response time to the gas to be detected. Any type of heating element known in the art can be considered. In a preferred embodiment, the heating element comprises one or more metal or metal alloy wires or metal or metal alloy layers, for example one or more platinum or platinum alloy wires or one or more platinum or platinum alloy layers.

Preferably, the heating element is capable of heating the sensing layer to a temperature of at least 180 °C. More preferably, the heating element is capable of heating the sensing layer to a temperature ranging between 200 and 350 °C as for example to a temperature of 250 °C or 300 °C.

In a preferred embodiment, the gas sensor according to the present invention further comprises a temperature sensor that is capable of generating an output that is indicative of the temperature of the sensing layer.

The temperature sensor preferably comprises a resistive temperature device, a thermocouple, a silicon band gap temperature sensor or a combination thereof. The temperature sensor may suitably comprise a metal or metal alloy layer, for example a metal or metal alloy layer disposed adjacent to the sensing layer.

The gas sensor according to the present invention is preferably configured to detect a volatile sulphurous compound, more particularly a sulphurous compound selected from hydrogen sulphide, methane thiol, dimethyl sulphide and combinations thereof. Most preferably, the gas sensor is configured to detect hydrogen sulfide.

In a preferred embodiment of the invention, the gas sensor generates a signal that is indicative of the concentration of a gas component in a gas that is in direct contact with the sensing layer. According to a particularly preferred embodiment, the gas sensor is capable of generating a signal that is indicative of the concentration of hydrogen sulphide, methane diol and/or dimethyl sulphide in a gas that is in direct contact with the sensing layer.

The detection limit of the gas sensor for one or more sulphurous compounds selected from hydrogen sulphide, methane thiol and dimethyl sulphide is less than 50 ppb, more preferably of less than 30 ppb and most preferably of less than 20 ppb.

The detection limit of a gas sensor is defined as the lowest concentration of a compound that can be detected by the sensor under the given conditions, particularly under the given temperature.

A gas sensor according to the present invention has preferably a response time for one or more volatile compounds in a gas and more particularly for one or more volatile compounds in a gas selected from hydrogen sulphide, methane thiol and dimethyl sulphide of less than 10 seconds. More preferably, the gas sensor has a response time for one or more volatile compounds in a gas selected from hydrogen sulphide, methane thiol and dimethyl sulphide of less than 5 seconds, most preferably of less than 3 seconds

The response time of a gas sensor is defined as the time required for a sensor to respond to an instant concentration change from zero to a certain concentration.

A gas sensor according to the present invention has preferably a recovery time for one or more volatile compounds in a gas and more particularly for one or more volatile compounds in a gas selected from hydrogen sulphide, methane thiol and dimethyl sulphide of less than 10 seconds. More preferably, the gas sensor has a recovery time for one or more volatile compounds in a gas selected from hydrogen sulphide, methane thiol and dimethyl sulphide of less than 5 seconds or less than 3 seconds.

The recovery time of a gas sensor is defined as the time it takes for a sensor signal to return to its baseline value after an instant concentration change from a certain value to zero.

According to a particularly preferred embodiment, the response time as well as the recovery time for one or more volatile compounds in a gas and more particularly for one or more volatile compounds in a gas selected from hydrogen sulphide, methane thiol and dimethyl sulphide, is less than 10 seconds.

In one advantageous embodiment of the present invention the gas sensor is configured to detect an individual gas component, such as hydrogen sulfide, methane thiol or dimethyl sulphide.

In another embodiment the gas sensor is configured to detect more than one component in a gas simultaneously. Other components of interest that may be detected simultaneously with hydrogen sulfide, methane thiol and/or dimethyl sulphide include hydrogen (H₂), propane (C₃H₈), nitrogen dioxide (NO₂), ammonia (NH₃), nitric oxide (NO), sulfur dioxide (SO₂) and carbon dioxide (CO₂).

In a preferred embodiments a gas sensor according to the present invention comprises a layered structure comprising
- a substrate layer;
- a heating layer; and
- the sensing layer.

The heating layer functions as a heating element capable of heating the sensing layer. The heating layer is preferably located between the substrate layer and the sensing layer. The heating layer is for example disposed adjacent to the substrate layer, adjacent to the sensing layer or adjacent to the substrate layer and the sensing layer.

The substrate layer preferably comprises a silica substrate, an alumina substrate or a zirconia substrate, e.g. an yttria stabilized zirconia substrate. In a particularly preferred embodiment the substrate layer comprises a silicon wafer.

In another preferred embodiment the gas sensor according to the present invention comprises a layered structure comprising
- a substrate layer;
- a heating layer;
- an insulating layer; and
- the sensing layer.

The heating layer and the insulating layer are preferably located between the substrate layer and the sensing layer. More preferably, the insulating layer is located between the heating layer and the sensing layer. The insulating layer helps to reduce leakage current and thereby improves the sensitivity of the gas sensor.

The insulating layer is preferably located adjacent to the sensing layer.

The insulating layer preferably comprises a layer made of silicon dioxide. The insulating layer has preferably a thickness ranging between 2 and 1000 nm, more preferably in the range between 5 and 500 nm.

The layered structure may further comprise a temperature sensor. The temperature sensor is preferably located adjacent to the sensing layer.

A second aspect of the present invention relates to a method of manufacturing a gas sensor as defined herein, said method comprising the step of preparing the sensing layer by physical vapour deposition (PVD). In a physical vapour deposition method a physical process is used to produce a vapor of a material which is then deposited on the substrate to be coated. A preferred physical vapour deposition method comprises sputtering.

In preferred embodiments, the sensing layer is obtained by sputter deposition starting form a metallic tungsten sputter target. More preferably, the sensing layer is obtained by sputtering (e.g DC sputtering) the sensing layer starting from a metallic tungsten sputter target with oxygen or a combination of oxygen and argon as sputter gas. At least part of the tungsten is converted into tungsten oxide, for example WO₃ or sub-stoichiometric or oxygen deficient WO₃.

In alternative embodiments, the sensing layer is obtained by sputter deposition (using e.g. RF sputtering) starting from a tungsten oxide sputter target for example with argon as sputter gas or with a combination of argon and oxide as sputter gas.

The sputtering of the sensing layer may comprise (reactive) DC sputtering or RF sputtering.

The present invention will be described below with respect to particular embodiments and with reference to then drawings but the invention is not limited to these particular embodiments. The drawings are only schematic and the size of some of the elements may be exaggerated and not drawn to scale for illustrative purposes.

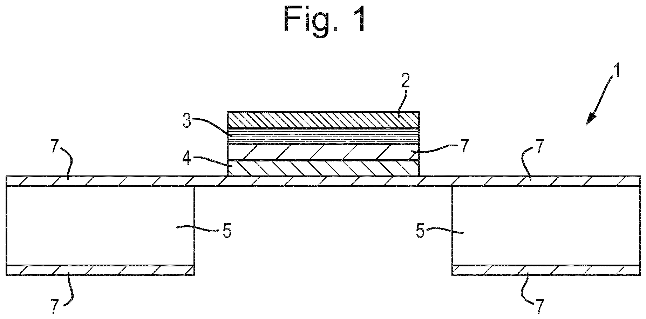

Figure 1 shows a schematic illustration of an embodiment of a gas sensor 1 according to the present invention.

The gas sensor 1 comprises a sensing layer 2, a first and second electrode 3 and a heating element 4. The sensing layer 2, the first and the second electrode 3 and the heating element 4 are preferably deposited on a substrate layer 5. The gas sensor 1 further comprises a temperature sensor 6 (not shown) and an insulating layer 7.

The substrate layer 5 comprises for example a silicon wafer.

The sensing layer 2 comprises between 20 and 95 wt. % tungsten oxide and between 5 and 80 wt.% elemental tungsten. The combination of tungsten oxide and elemental tungsten constitutes at least 60 wt. of the sensing layer 2. The presence of tungsten oxide and of elemental tungsten is confirmed by X-ray Photoelectron spectroscopy (XPS).

The sensing layer 2 has a thickness of -200 nm and a roughness measured by Atomic Force Microscopy (AFM) of 2.9 nm.

The first and second electrode 3 comprise, for example, platinum. The first and the second electrode 3 are preferably spaced from each other by 10 to 30 µm distance. Interdigitated electrodes may suitably be employed as first and second electrode 3.

The heater element 4 comprises, for example, platinum and permits to heat the sensing layer 2 to an operational temperature higher than 100 °C.

The temperature sensor 6 comprises, for example, a metal layer, preferably platinum.

The insulating layer 7 comprises, for example, a SiO₂ layer, such as a SiO₂ layer having a thickness of 500 nm.

The invention is further illustrated by the following non-limiting examples

### Examples

### Example 1

A gas sensor according to the present invention was prepared as described below.

A p-type silicon <100> wafer having a size of 1cm x 1cm was first cleaned in a RCA-1 solution (NH₄OH:H₂O₂:H₂O = 1:1:5) followed by cleaning in a RCA-2 solution (HCl:H₂O₂:H₂O = 1:1:6). Subsequently, the silicon wafer was rinsed in deionized water and dipped in a diluted HF solution to remove any oxide at the surface.

On the cleaned substrate a SiO₂ layer was grown by thermal oxidation in a pyrogenic furnace by a dry-wet-dry oxidation process. The furnace was first ramped up to 600 °C before the substrates were loaded. Then the furnace was ramped up to 1100 °C in N₂ ambient (5 litre/min). Once the temperature was steady at 1100 °C, the purging of N₂ gas into the furnace was stopped and the dry oxidation was started for 15 minutes in O₂ (5 litre/minute) to obtain a good interface between the silicon and the grown SiO₂.

As the growth rate achieved by dry oxidation was low, the dry oxidation was followed by wet oxidation during 3 hours in H₂ (4 litre/min) and O₂ (2 litre/min). Wet oxidation leads to faster growth but to a lower quality of SiO₂ compared to SiO₂ obtained by dry oxidation. Therefore, another dry oxidation step was carried out for 15 minutes in O₂ ambient (5 litre/min) to grow SiO₂ on top of the SiO₂ grown by wet oxidation. The furnace was subsequently ramped down to 500 °C and the samples were unloaded.

A sensing layer comprising tungsten oxide and elemental tungsten was deposited on the oxidized silicon wafer using a Direct Current (DC) sputter magnetron (TECPORT DC). The sputter target comprised a 3-inch tungsten (W) target. The distance between the sputter target and the oxidized silicon wafer was fixed at 7.5 cm. The vacuum chamber was first evacuated to a base pressure of 6 x 10⁻⁶ T. Then Argon gas (200 sccm) was let into the chamber to create the deposition pressure of 6 x 10⁻⁴ T. A DC source of 100 W was applied to the target and pre-sputtering was done for 1200 seconds. Oxygen gas (200 sccm) was then let into the vacuum chamber to create the plasma to deposit the tungsten oxide. The target shutter was opened to expose the samples to the plasma. The deposition time was 2300 seconds which resulted in a sensing layer having a thickness of 170 nm. The obtained samples were pinkish. By varying the deposition time sensing layers having various thicknesses can be obtained.

To apply the electrodes, the obtained samples were subjected to a photo-lithography process step, an electrode deposition process step and a lift-off process step. The samples were first cleaned with acetone and isopropanol, respectively. Subsequently, the samples were rinsed with deionized water, followed by a nitrogen blow and drying. In a next step the samples were baked on a hot plate at 250 °C for 15 minutes to dehydrate.

A positive photo resist layer AZ 5214E was applied by spin coating with 500 rpm for 5 seconds, 4000 rpm for 40 seconds and 500 rpm for 5 seconds. The samples were then immediately prebaked at 110 °C for 1:10 min and were put down for 2 minutes relaxation. Subsequently, the samples were exposed to UV light through a chrome mask with interdigitated capacitor (IDC) pattern. The UV exposure was carried out using an EVG Mask Aligner system. The UV exposure dosage was 45 mJ/cm². After UV exposure the samples were developed using MF 26A developer for 25 seconds and were then immediately dipped in water. Finally, the samples were rinsed with deionized water and were blown dry with N₂ gas.

After the photo-lithography process step the samples were loaded into a magnetron sputtering system (a TECPORT magnetron) for Ti/Pt sputtering. Sputtering was done from a 3 inch Ti and Pt target at a pressure of 6 x 10⁻⁶ T. The deposition time varied between 10 seconds and 90 seconds which resulted in a thickness of the electrodes ranging between 10 nm and 90 nm. The argon gas flow was maintained at 200 sccm. Ti deposition was carried out at 40 seconds using a 150 W DC power supply. Pt deposition was carried out during 300 seconds using a 35 W DC power supply.

For the lift-off process the samples were placed in a Petri dish filled with acetone and were kept in an ultra-sonicator system for 1 minute. This resulted in a faster lift-off of the metal leaving a clean interdigitated sensing electrode structure on top of the samples. The samples were then rinsed in isopropanol followed by rinsing in deionized water and blowing dry using N₂ gas.

### Comparative Example A

Another gas sensor not according to the present invention was prepared by cleaning and oxidizing a p-type silicon wafer in the same way as in Example 1.

Next, a sensing layer comprising tungsten oxide was deposited on the oxidized silicon wafer using a Radio Frequency (RF) sputter magnetron (TECPORT RF). The sputter target comprised a 3-inch tungsten oxide (WO₃) target. The distance between the sputter target and the oxidized silicon wafer was fixed at 7.5 cm. The vacuum chamber was first evacuated to a base pressure of 6 x 10⁻⁵ T. Then Argon gas (200 sccm) was let into the chamber to create the deposition pressure of 6 x 10⁻³ T. A RF source of 100 W was applied to the target and pre-sputtering was done for 900 seconds. The target shutter was opened to expose the samples to the plasma. The deposition time was 1800 seconds which resulted in a sensing layer having a thickness ranging between 160 and 170 nm. The obtained samples appeared pinkish. By varying the deposition time sensing layers having various thickness can be obtained.

Subsequently, the samples were subjected to a photolithography process step, an electrode deposition step and a lift-off process step as described in Example 1.

### Example 2

The sensing layers of the sensors of Example 1 and Comparative Example A were characterized by X-ray diffraction (XRD, Rigaku, Cu-Kα), X-ray photoelectron spectroscopy (XPS, Krotos, Al-Kα radiation), scanning electron microscope (Carl Zeiss FESEM) to determine and characterize their structure, chemical composition, morphology and the distribution of the elemental tungsten versus the tungsten oxides. The XRD spectra confirmed monoclinic phase of WO₃ for both sensing layers. The calculated grain size for both is ∼ 10 nm. The XPS spectra showed the presence of both tungsten and tungsten oxide peaks in the DC sputtered sensing layer of Example 1, whereas only tungsten oxide peaks were observed for the RF sputtered sensing layer of Comparative Example A. This confirms only partial conversion of tungsten into tungsten oxide through DC sputtering.

### Example 3

The sensitivity of the gas sensor of Examples 1 and Comparative Example A for H₂S was tested inside a gas chamber with controlled substrate heating. The atmosphere inside the gas chamber was controlled precisely by gas mixing system based on electronic mass flow controllers. Measurements were made with a Keithley Source Measure Unit (SMU-237).

The response of the gas sensor according to the present invention to decreasing concentrations of hydrogen sulphide was determined, whilst keeping the temperature of the sensing layer between 250°C and 270°C.

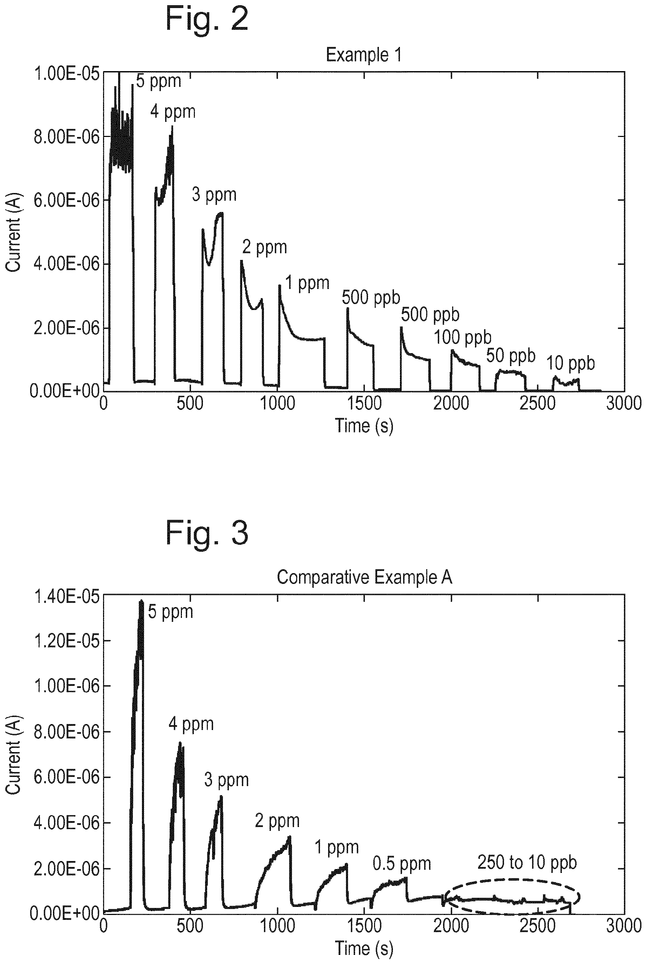

The results of this responsiveness test are shown in Figure 2 and Figure 3.

## Claims

1. A gas sensor (1) for detecting a gas component comprising:
• a sensing layer (2) comprising 20 to 95 wt.% tungsten oxide and 5 to 80 wt.% elemental tungsten, the combination of tungsten oxide and elemental tungsten constituting at least 60 wt.% of the sensing layer (2);
• a first electrode and a second electrode (3), said first and second electrode (3) being coupled electronically across the sensing layer (2);
• a heating element (4) capable of heating the sensing layer (2) to a temperature of at least 150°C.

2. Gas sensor (1) according to claim 1, wherein the sensing layer (2) has a thickness in the range of 50 to 1000 nm.

3. Gas sensor (1) according to claim 1 or 2, wherein the sensing layer (2) has a surface roughness of less than 50 nm.

4. Gas sensor (1) according to any one of the preceding claims, wherein the gas sensor (1) further comprises a temperature sensor (6) that is capable of generating an output that is indicative of the temperature of the sensing layer (2).

5. Gas sensor (1) according to any one of the preceding claims, wherein the gas sensor (1) is configured to detect one or more volatile sulphurous compounds selected from hydrogen sulphide, methane thiol and dimethyl sulphide.

6. Gas sensor (1) according to claim 5, wherein the gas sensor (1) is configured to generate an output that is indicative of the concentration of the one or more volatile sulphurous compounds in a gas that is in direct contact with the sensing layer (2).

7. Gas sensor (1) according to claim 5 or 6, wherein the gas sensor (1) has a detection limit for the one or more volatile sulphurous compounds of less than 50 ppb.

8. Gas sensor (1) according to any one of claims 5 to 7, wherein the gas sensor (1) has a response time for the one or more volatile sulphurous compounds lower than 10 seconds.

9. Gas sensor (1) according to any one of claims 5 to 8, wherein the gas sensor (1) has a recovery time for the one or more volatile sulphurous compounds lower than 10 seconds.

10. Gas sensor (1) according to any one of the preceding claims, wherein the gas sensor (1) comprises a laminate comprising:
• a substrate layer(5);
• a heating layer (4);
• an insulating layer (7); and
• the sensing layer (2);
wherein the heating layer (4) and the insulating layer (7) are located between the substrate layer (5) and the sensing layer (2), the insulating layer (7) being located between the heating layer (4) and the sensing layer (2).

11. Gas sensor (1) according to claim 10, wherein substrate layer is a silicon wafer.

12. Gas sensor (1) according to claim 10 or 11, wherein the insulating layer (7) has thickness of 2 to 1000 nm and is made of silicon dioxide.

13. Gas sensor (1) according to any one of claims 10 to 12, wherein the insulating layer (7) is located adjacent to the sensing layer (2).

14. A method of manufacturing a gas sensor (1) according to any one of the preceding claims, said method comprising deposition of the sensing layer by physical vapour deposition (PVD).

15. Method according to claim 14, wherein the method comprises deposition of the sensing layer by sputtering from a tungsten sputter target or by sputtering from a tungsten oxide sputter target.

## Patentansprüche

1. Gassensor (1) zum Detektieren einer Gaskomponente, der Folgendes umfasst:
• eine Erfassungsschicht (2), die 20 bis 95 Gew.-% Wolframoxid und 50 bis 80 Gew.-% elementares Wolfram enthält, wobei die Kombination aus Wolframoxid und elementarem Wolfram wenigstens 60 Gew.-% der Erfassungsschicht (2) bildet;
• eine erste Elektrode und eine zweite Elektrode (3), wobei die erste und die zweite Elektrode (3) über die Erfassungsschicht (2) elektronisch gekoppelt sind;
• ein Heizelement (4), das die Erfassungsschicht (2) auf eine Temperatur von wenigstens 150 °C erhitzen kann.

2. Gassensor (1) nach Anspruch 1, wobei die Erfassungsschicht (2) eine Dicke im Bereich von 50 bis 1000 nm besitzt.

3. Gassensor (1) nach Anspruch 1 oder 2, wobei die Erfassungsschicht (2) eine Oberflächenrauheit von weniger als 50 nm besitzt.

4. Gassensor (1) nach einem der vorhergehenden Ansprüche, wobei der Gassensor (1) ferner einen Temperatursensor (6) umfasst, der einen Ausgang erzeugen kann, der die Temperatur der Erfassungsschicht (2) angibt.

5. Gassensor (1) nach einem der vorhergehenden Ansprüche, wobei der Gassensor (1) konfiguriert ist, eine oder mehrere flüchtige schwefelhaltige Verbindungen, die aus Schwefelwasserstoff, Methanthiol und Dimethylsulfid gewählt sind, zu detektieren.

6. Gassensor (1) nach Anspruch 5, wobei der Gassensor (1) konfiguriert ist, einen Ausgang zu erzeugen, der die Konzentration der einen oder der mehreren flüchtigen schwefelhaltigen Verbindungen in einem Gas, das in direktem Kontakt mit der Erfassungsschicht (2) ist, angibt.

7. Gassensor (1) nach Anspruch 5 oder 6, wobei der Gassensor (1) eine Detektionsgrenze für die eine oder die mehreren flüchtigen schwefelhaltigen Verbindungen von weniger als 50 ppb hat.

8. Gassensor (1) nach einem der Ansprüche 5 bis 7, wobei der Gassensor (1) eine Ansprechzeit für die eine oder die mehreren flüchtigen schwefelhaltigen Verbindungen von weniger als 10 Sekunden hat.

9. Gassensor (1) nach einem der Ansprüche 5 bis 8, wobei der Gassensor (1) eine Wiederherstellungszeit für die eine oder die mehreren flüchtigen schwefelhaltigen Verbindungen von weniger als 10 Sekunden hat.

10. Gassensor (1) nach einem der vorhergehenden Ansprüche, wobei der Gassensor (1) ein Laminat enthält, das Folgendes umfasst:
• eine Substratschicht (5);
• eine Heizschicht (4);
• eine Isolierschicht (7); und
• die Erfassungsschicht (2);
wobei sich die Heizschicht (4) und die Isolierschicht (7) zwischen der Substratschicht (5) und der Erfassungsschicht (2) befinden und wobei sich die Isolierschicht (7) zwischen der Heizschicht (4) und der Erfassungsschicht (2) befindet.

11. Gassensor (1) nach Anspruch 10, wobei die Substratschicht ein Siliciumwafer ist.

12. Gassensor (1) nach Anspruch 10 oder 11, wobei die Isolierschicht (7) eine Dicke von 2 bis 1000 nm besitzt und aus Siliciumdioxid hergestellt ist.

13. Gassensor (1) nach einem der Ansprüche 10 bis 12, wobei sich die Isolierschicht (7) in der Nähe der Erfassungsschicht (2) befindet.

14. Verfahren zum Herstellen eines Gassensors (1) nach einem der vorhergehenden Ansprüche, wobei das Verfahren das Abscheiden der Erfassungsschicht durch physikalische Abscheidung aus der Dampfphase (PVD) umfasst.

15. Verfahren nach Anspruch 14, wobei das Verfahren das Abscheiden der Erfassungsschicht durch Zerstäuben aus einem Wolframzerstäubungstarget oder durch Zerstäuben aus einem Wolframoxidzerstäubungstarget umfasst.

## Revendications

1. Capteur de gaz (1) pour détecter un constituant de gaz comprenant :
• une couche de détection (2) comprenant de 20 à 95 % en masse d'oxyde de tungstène et de 5 à 80 % en masse de tungstène élémentaire, la combinaison d'oxyde de tungstène et de tungstène élémentaire constituant au moins 60 % en masse de la couche de détection (2) ;
• une première électrode et une seconde électrode (3), lesdites première et seconde électrodes (3) étant électroniquement couplées à travers la couche de détection (2) ;
• un élément chauffant (4) capable de chauffer la couche de détection (2) à une température d'au moins 150°C.

2. Détecteur de gaz selon la revendication 1, dans lequel la couche de détection (2) présente une épaisseur dans l'intervalle de 50 à 1 000 nm.

3. Détecteur de gaz (1) selon la revendication 1 ou 2, dans lequel la couche de détection (2) présente une rugosité de surface inférieure à 50 nm.

4. Détecteur de gaz (1) selon l'une quelconque des revendications précédentes, dans lequel le détecteur de gaz (1) comprend de plus un détecteur de température (6) qui est capable de produire un résultat qui est indicateur de la température de la couche de détection (2).

5. Détecteur de gaz (1) selon l'une quelconque des revendications précédentes, dans lequel le détecteur de gaz (1) est configuré pour détecter un ou plusieurs composés sulfureux volatils choisis parmi le sulfure d'hydrogène, le méthane diol et le sulfure de diméthyle.

6. Détecteur de gaz (1) selon la revendication 5, dans lequel le détecteur de gaz (1) est configuré pour produire un résultat qui est indicateur de la concentration des un ou plusieurs composés sulfureux volatils dans un gaz qui est en contact direct avec la couche de détection (2).

7. Détecteur de gaz (1) selon la revendication 5 ou 6, dans lequel le détecteur de gaz (1) présente une limite de détection pour les un ou plusieurs composés sulfureux volatils inférieure à 50 ppb.

8. Détecteur de gaz (1) selon la revendication 5 à 7, dans lequel le détecteur de gaz (1) présente un temps de réponse pour les un ou plusieurs composés sulfureux volatils inférieur à 10 secondes.

9. Détecteur de gaz (1) selon l'une quelconque des revendications 5 à 8, dans lequel le détecteur de gaz (1) présente un temps de récupération pour les un ou plusieurs composés sulfureux volatils inférieur à 10 secondes.

10. Détecteur de gaz (1) selon l'une quelconque des revendications précédentes, dans lequel le détecteur de gaz (1) comprend un stratifié comprenant :
• une couche de substrat (5) ;
• une couche chauffante (5) ;
• une couche isolante (7) ; et
• la couche de détection (2) ;
dans lequel la couche chauffante (4) et la couche isolante (7) sont disposées entre la couche de substrat (5) et la couche de détection (2), la couche isolante (7) étant disposée entre la couche chauffante (4) et la couche de détection (2).

11. Détecteur de gaz (1) selon la revendication 10, dans lequel la couche de substrat est une galette de silicium.

12. Détecteur de gaz (1) selon la revendication 10 ou 11, dans lequel la couche isolante (7) présente une épaisseur de 2 à 1 000 nm et est constituée de dioxyde de silicium.

13. Détecteur de gaz (1) selon l'une quelconque des revendications 10 à 12, dans lequel la couche isolante (7) est disposée à côté de la couche de détection (2).

14. Procédé de fabrication d'un détecteur de gaz (1) selon l'une quelconque des revendications précédentes, ledit procédé comprenant le dépôt de la couche de détection par dépôt physique en phase vapeur (PVD).

15. Procédé selon la revendication 14, dans lequel le procédé comprend le dépôt de la couche de détection par pulvérisation cathodique à partir d'une cible de pulvérisateur cathodique de tungstène ou par pulvérisation cathodique d'une cible de pulvérisateur cathodique d'oxyde de tungstène.
